# EUROPÄISCHE PATENTSCHRIFT

(11) **EP 0 576 814 B1**
(45) Veröffentlichungstag und Bekanntmachung des Hinweises auf die Patenterteilung: **18.10.1995**
(21) Anmeldenummer: 93107929.7
(22) Anmeldetag: 14.05.1993
(51) Int. Cl.: F16B 2/08, F16L 23/06

(54) **Vorrichtung zum Verbinden zylindrischer Bauteile**
Device for connecting cylindrical components
Dispositif de raccordement d'éléments tubulaires

(30) Priorität: 01.07.1992 DE 4221525
(43) Veröffentlichungstag der Anmeldung: 05.01.1994
(73) Patentinhaber: Daimler-Benz Aerospace Aktiengesellschaft, 80995 München (DE)
(72) Erfinder: Hornung, Ernst, W-2805 Stuhr (DE); Hornung, Stefan, W-5100 Aachen (DE); Öry, Huba, Prof. Dr., W-5100 Aachen (DE); Rittweger, Andreas, D-52072 Aachen (DE)
(74) Vertreter: Hansmann, Dierk, Dipl.-Ing.

(56) Entgegenhaltungen:
- DE-A- 2 655 772
- DE-A- 3 247 148
- FR-A- 910 563
- FR-A- 1 219 395

## Beschreibung

Die Erfindung betrifft eine Vorrichtung zum lösbaren Verbinden zylindrischer Bauteile in Form eines Spannbandes, das die zu verbindenden Bereiche der Bauteile umfaßt, auf dessen Innenseite mit flanschartig ausgebildeten Ansätzen der Bauteile zusammenwirkende Klammerelemente angeordnet sind und das mit wenigstens einem Spannelement versehen ist, in dem die Endbereiche des Spannbandes um senkrecht zur Zugrichtung angeordnete Bolzen geführt sind.

Vorrichtungen dieser Art werden unter anderem in der Luft- und Raumfahrttechnik benutzt, beispielsweise zu dem Zwecke, Nutzlasten auf Endstufen von Trägerraketen zu haltern und diese bei Erreichen der vorgesehenen Umlaufbahn durch das Lösen des Spannbandes voneinander zu trennen. Eine solche Vorrichtung, die auch unter der Bezeichnung Marman-Spannband oder -Klemme bekannt ist, ist in der DE-OS 26 55 772 beschrieben. Sie stellt eine form- und kraftschlüssige Verbindung zweier zylindrischer Bauteile dar, wobei die Vorspannung eines flexiblen Stahlbandes die auf ihrer Innenseite konisch ausgebildeten Klammerelemente auf ebenfalls konische Lippen preßt, die an die Endbereiche der miteinander zu verbindenden Bauteile angeformt sind, und dadurch deren Kontaktflächen aneinander drückt.

Das Marman-Spannband hat sich bisher bei einer Vielzahl von Satellitenstarts als einfache, kostengünstige und zuverlässige Verbindungsvorrichtung erwiesen. Einer noch weitergehenden Anwendung dieses Spannbandes in der Luft- und Raumfahrttechnik steht allerdings die Tatsache entgegen, daß bei den bekannten Vorrichtungen das Lösen des Spannbandes dadurch herbeigeführt wird, daß das Spannelement, das die beiden Endbereiche des Bandes zusammenhält, aufgesprengt wird. Deshalb ist die bekannte Verbindungsvorrichtung in all jenen Fällen nicht einsetzbar, in denen eine Nutzlast von einer Transferstufe ab- und wieder an diese angekoppelt werden soll. In der Regel ist in diesen Fällen ein zweiter Mechanismus erforderlich, um die Nutzlast wieder einzufangen.

Aufgabe der Erfindung ist es, eine Vorrichtung der eingangs genannten Art so auszubilden, daß sie auf möglichst einfache und zuverlässige Weise ein mehrfaches Trennen und Wiederverbinden zweier Bauteile gestattet, wobei diese Vorrichtung auch für das Verbinden relativ großer Bauteile mit Durchmessern im Bereich von mehreren Metern geeignet sein soll.

Die Erfindung löst diese Aufgabe durch eine Vorrichtung mit den kennzeichenden Merkmalen des Patentanspruchs 1. Vorteilhafte Weiterbildungen der erfindungsgemäßen Vorrichtung mit dem Ziel, einerseits die Funktionssicherheit des Spannelementes weiter zu erhöhen und andererseits die Reibung der Klammerelemente an den zu verbindenden Bauteilen herabzusetzen, sind in den weiteren Patentansprüchen angegeben.

Nachfolgend soll die Erfindung anhand von in der Zeichnung dargestellten Ausführungsbeispielen näher erläutert werden. Es zeigen:
- Fig. 1: eine perspektivische Übersichtsdarstellung eines Teils einer Spannvorrichtung in geöffnetem Zustand,
- Fig. 2: einen vertikalen Schnitt durch die Anordnung gemäß Fig. 1 im Bereich des Spannelementes bei geschlossenem Spannband,
- Fig. 3: einen Schnitt durch die Endbereiche zweier miteinander zu verbindender Bauteile an beliebiger Stelle des Umfanges,
- Fig. 4 und 5: eine seitliche Ansicht und eine Draufsicht auf ein Spannelement im geöffnetem Zustand,
- Fig. 6 und 7: entsprechende Darstellungen auf ein Spannelement im geschlossenen Zustand,
- Fig. 8: eine schematische Darstellung der Kinematik der Anordnung gemäß Fig. 1,
- Fig. 9 und 10: eine perspektivische Darstellung sowie eine Draufsicht auf ein zweites Spannelement und
- Fig. 11 und 12: eine Draufsicht sowie eine Schnittdarstellung eines Teils eines zweiten Spannbandes.

In den Figuren sind gleiche Bauteile mit den gleichen Bezugszeichen versehen.

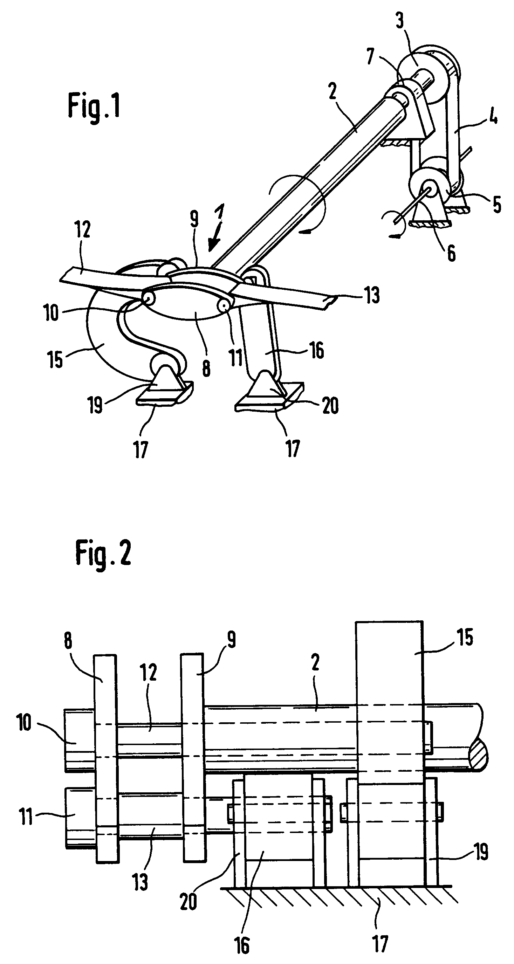

Der in Fig. 1 dargestellte Teilbereich einer Spannvorrichtung besteht aus einem Spannelement 1, das über ein als Antriebswelle fungierendes Torsionsrohr 2, ein Zahnrad 3, einen Zahnriemen 4 sowie ein weiteres Zahnrad 5 mit der Ausgangswelle 6 eines in der Figur nicht gezeigten Antriebsmotors verbunden ist. Das Torsionsrohr 2 ist im Bereich des Zahnrades 3 über ein Festlager 7 gehaltert, welches mit einem Kugelpendellager ausgestattet ist und auf diese Weise zwar beliebige Drehbewegungen ermöglicht, das Torsionsrohr 2 aber in axialer Richtung festlegt.

Das Spannelement 1 ist als starrer rechteckiger Rahmen aufgebaut, der durch zwei Seitenteile 8 und 9 sowie aus zwei Bolzen 10 und 11 besteht, die die Seitenteile 8 und 9 miteinander verbinden, und die, wie insbesondere die Schnittdarstellung in Fig. 2 zeigt, seitlich aus diesen herausragen. Um die Bolzen 10 und 11 sind die beiden Enden 12 und 13 eines Spannbandes 14 herumgeführt, das im Fall des hier dargestellten Ausführungsbeispiels als flexibles flaches Metallband ausgebildet ist. Die aus dem Seitenteil 9 des Spannelementes 1 herausragenden Enden der Bolzen 10 und 11 sind jeweils in Pendelstützen 15 und 16 drehbar gelagert, welche ihrerseits, ebenso wie die Ausgangswelle 6 des Antriebsmotors, an der Struktur eines von zwei miteinander zu verbindenden zylindrischen Bauteilen 17 und 18 befestigt sind. Die Lagerung der Pendelstützen 15 und 16 erfolgt dabei wieder über Kugelpendellager, die in Lagerböcken 19 und 20 angeordnet sind.

Das Torsionsrohr 2 ist im mittleren Bereich des Seitenteils 9 fest mit diesem verbunden, so daß das Spannelement 1 in bezug auf seine durch das Torsionsrohr 2 gebildete Drehachse einen zweiarmigen Hebel bildet. Wie aus Fig. 1 ersichtlich ist, ist die Pendelstütze 15 bogenförmig ausgebildet, so daß sie bei einer in Fig. 1 durch einen Richtungspfeil angedeuteten Drehbewegung des Torsionsrohres 2 und damit des Spannelementes 1 über das Torsionsrohr 2 greift.

Der Ablauf des Spann- bzw. Öffnungsvorganges der vorstehend beschriebenen Spannvorrichtung, bei der in den meisten Fällen mehrere, im Fall des hier beschriebenen Ausführungsbeispiels vier Spannelemente gleichmäßig über den Umfang des Spannbandes verteilt angeordnet sind, wird anhand der Figuren 4 bis 8 verdeutlicht. Fig. 4 zeigt dabei zunächst noch einmal, daß sich die Anlenkpunkte der Pendelstützen 15 und 16 jeweils im Bereich von konischen Lippen oder Interfaceringen 21 und 22 befinden, die an die miteinander zu verbindenden Endbereich der beiden miteinander zu verbindenden Bauteile 17 und 18 angeformt sind.

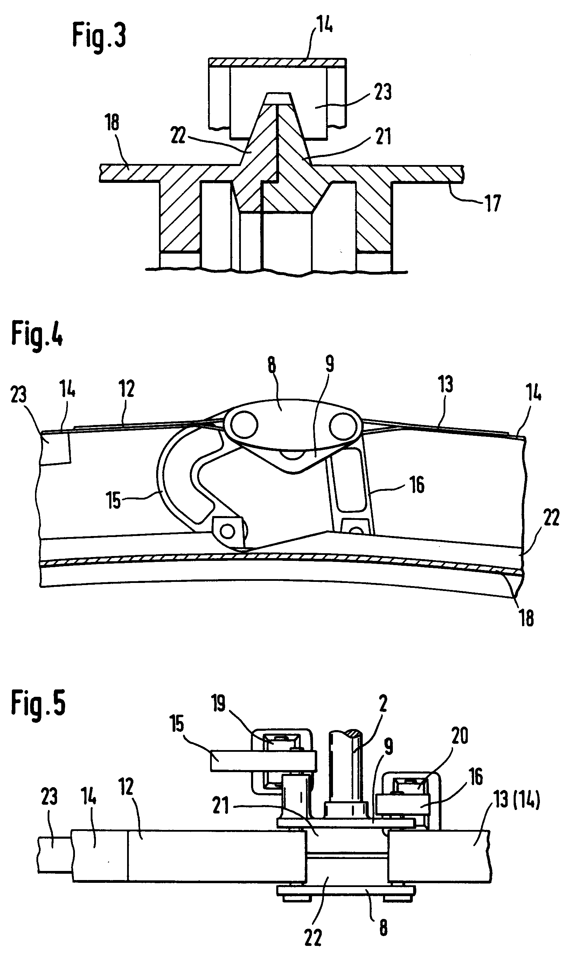

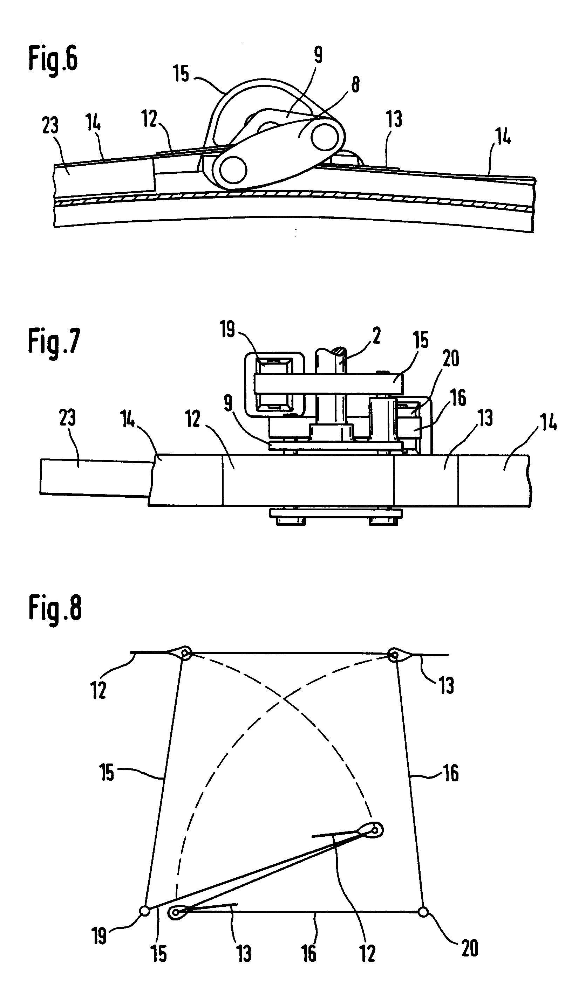

Ferner wird aus der Darstellung in den Figuren 4 und 6 erkennbar, daß im Fall des hier beschriebenen Ausführungsbeispiels dasjenige Seitenteil 9 des Spannelementes 1, das mit dem Torsionsrohr 2 verbunden ist, abweichend von der länglichen, ovalen Form des anderen Seitenteils 8 in der Weise dreieckförmig ausgebildet ist, daß der Angriffspunkt des Torsionsrohres 2 außerhalb im geöffneten Zustand der Spannvorrichtung unterhalb der Verbindungslinie der beiden Bolzen 10 und 11 liegt. Das Verschließen der Spannvorrichtung wird durch eine vom Antriebsmotor eingeleiteten und vom Zahnriemen 4 sowie dem Torsionsrohr 2 auf das Spannelement 1 übertragenen Drehbewegung im Uhrzeigersinn entsprechend Fig. 4 herbeigeführt. Wie die Darstellung des Bewegungsablaufs der gesamten Anordnung in Fig. 8 zeigt, wandern als Folge dieser Drehbewegung die beiden das Spannband 14 tragenden Bolzen 10 und 11 jeweils auf einer Kreisbahn um die beiden Anlenkpunkte der Pendelstützen 15 und 16, die Lagerböcke 19 und 20, in Richtung auf die Interfaceringe 21 und 20. Durch diese Bewegung werden die beiden Endbereiche 12 und 13 des Spannbandes 14 übereinandergeschlagen, zugleich wird dadurch der Durchmesser des Spannbandes 14 so weit verringert, daß gleichmäßig über den Umfang des Spannbandes 14 verteilt angeordnete Klammerelemente 23 über die Interfaceringe 21 und 22 greifen. Diese Klammerelemente sind, das zeigt die Schnittdarstellung in Fig. 3, auf ihrer den Interfaceringen 21 und 22 zugewandten Innenseite mit konischen Ausnehmungen versehen, die sich beim Spannen des Bandes 14 formschlüssig an die ebenfalls konischen Außenflächen der Interfaceringe 21 und 22 legen und so auf die miteinander zu verbindenden Bauteile 17 und 18 eine Haltekraft in axialer Richtung ausüben. Die in den Figuren 6 und 7 dargestellte Endlage der Anordnung zeigt, daß sich als Folge der Schließbewegung auch der mit dem Spannelement 1 verbundene Endbereich des Torsionsrohres 2 in Richtung auf die Interfaceringe 21 und 22 bewegt hat, so daß in dieser Schließstellung das Torsionsrohr 2 eine Schrägstellung in bezug auf seine Ausgangslage einnimmt, die durch das erwähnte Kugelpendellager im Festlager 7 ermöglicht wird.

Die Öffnungsbewegung der Anordnung wird durch eine Drehbewegung des Torsionsrohres 2 entgegen dem Uhrzeigersinn eingeleitet, wobei als Ausgangsposition die in den Figuren 6 und 7 gezeigte Schließstellung anzusehen ist und wobei die Endstellung diejenige Position ist, die in den Figuren 4 und 5 gezeigt ist. Der gesamte Bewegungsablauf ist beliebig oft wiederholbar, so daß zum Beispiel bei einer Mission im Weltraum zunächst eine mitbeförderte Nutzlast von einem Trägersystem abgekoppelt werden kann und zu einem späteren Zeitpunkt entweder dieselbe oder eine andere Nutzlast eingefangen und für den Rücktransport zur Erde wieder an das Trägersystemangekoppelt werden kann.

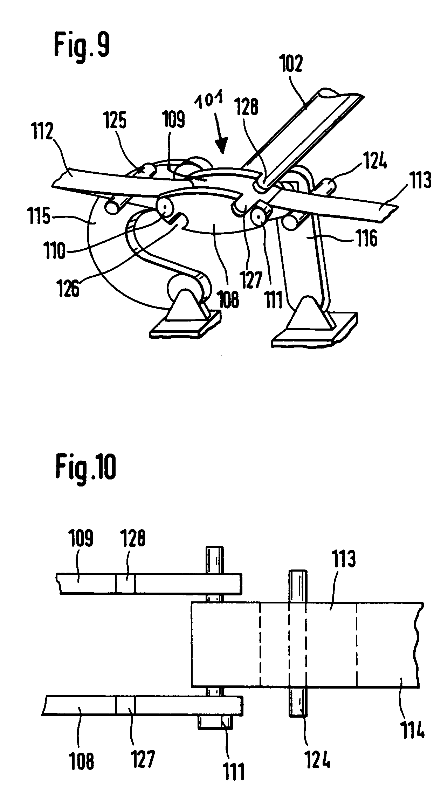

Um eine zusätzliche Arretiermöglichkeit in der Schließstellung des Spannelementes zu schaffen und damit die Funktionssicherheit der gesamten Spannvorrichtung noch weiter zu erhöhen, sind bei dem in den Figuren 9 und 10 dargestellten zweiten Ausführungsbeispiel der Spannvorrichtung zusätzliche Haltebolzen 124,125 in den beiden Endbereichen 112 und 113 des Spannbandes vorgesehen. Diese ragen zu beiden Seiten des Spannbandes aus diesem heraus und werden im Verlauf der Schließbewegung des Spannelementes 101 in Eingriff mit entsprechenden Ausnehmungen 126 bis 128 in den beiden Seitenteilen 108 und 109 des Spannelementes 101 gebracht. Der übrige Aufbau mit einem Torsionsrohr 102 sowie mit zwei Pendelstützen 105 und 106 entspricht dabei der in den Figuren 1 bis 8 gezeigten Anordnung.

Um die Steifigkeit des Spannelementes zusätzlich zu erhöhen, ist es weiterhin möglich, die beiden Seitenteile 8,9 bzw. 108,109 durch eine zusätzliche Querrippe zwischen den Bolzen 10 und 11 bzw. 110 und 111 zu verbinden bzw. das Torsionsrohr 2,102 mit beiden Seitenteilen zu verbinden.

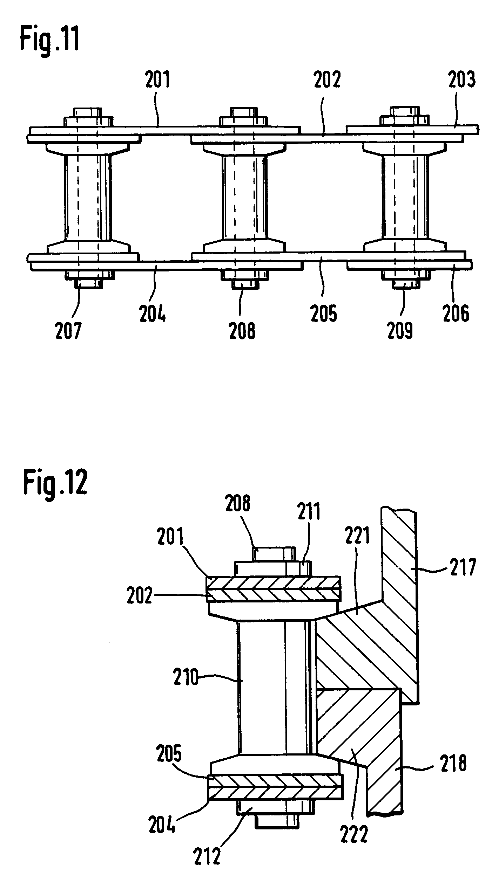

Schließlich sieht ein weiteres Ausführungsbeispiel, das in den Figuren 11 und 12 dargestellt ist, anstelle eines flexiblen Stahlbandes mit separaten Klammerelementen ein Spannband vor, das entsprechend einer Gliederkette aufgebaut ist, in die die Klammerelemente integriert sind. Die Glieder dieser Kette bestehen dabei aus Stegen 201 bis 206, die über Bolzen 207 bis 209 gelenkig miteinander verbunden sind.

Jeder der Bolzen 207 bis 209 ist im Bereich zwischen den Stegen 201 bis 206 von einer Hülse 210 umgeben, deren Endbereiche sich konisch erweitern und die zwischen den Stegen 201 bis 206 drehbar gehaltert sind. Die konisch geformten Bereiche der Hülsen 210 entsprechen in ihrem Neigungswinkel den Außenflächen von Interfaceringen 221 und 222, die an zwei miteinader zu verbindende zylindrische Bauteile 217 und 218 angeformt sind. Die Stege 201 bis 206 werden auf den Bolzen 207 bis 209 durch Unterlegscheiben 211,212 gehalten.

Beim Spannen der Gliederkette mittels einer oder mehrerer der anhand der Figuren 1 und 2 beschriebenen Spannelemente legt sich diese gleichmäßig fest an die Interfaceringe 221 und 222 an, wobei die Hülsen 210 auf den Außenflächen dieser Interfaceringe abrollen und auf diese Weise jede Reibung, wie sie beim Spannen und Lösen eines Spannbandes mit festen Klammerelementen unvermeidlich ist, ausgeschaltet ist.

## Patentansprüche

1. Vorrichtung zum lösbaren Verbinden zylindrischer Bauteile in Form eines Spannbandes, das die zu verbindenden Bereiche der Bauteile umfaßt, auf dessen Innenseite mit flanschartig ausgebildeten Ansätzen der Bauteile zusammenwirkende Klammerelemente angeordnet sind und das mit wenigstens einem Spannelement versehen ist, in dem die Endbereiche des Spannbandes um senkrecht zur Zugrichtung angeordnete Bolzen geführt sind, dadurch gekennzeichnet, daß das Spannelement (1,101) als zweiarmiger Hebel ausgebildet ist, an dessen beiden Endbereichen die Bolzen (10,11,110,111) angeordnet sind und der an einer Schwenkachse um seinen Mittelpunkt schwenkbar gehaltert ist.

2. Vorrichtung nach Anspruch 1, dadurch gekennzeichnet, daß der Schwenkachse (2,102) des Spannelementes (1,101) eine Drehantriebsvorrichtung (3-6) zugeordnet ist.

3. Vorrichtung nach Anspruch 1 oder 2, dadurch gekennzeichnet, daß die Halterung des Spannelementes (1,101) über ein an der Schwenkachse (2,102) angreifendes Festlager (7) sowie über zwei Pendelstützen (15,16,115,116) erfolgt, die mit den Bolzen (10,11,110,111) verbunden sind und die an der Struktur eines der miteinander zu verbindenden Bauteile (17,18,217,218) angelenkt sind.

4. nach Anspruch 3, dadurch gekennzeichnet, daß eine der Pendelstützen (15,16,115,116) bogenförmig ausgebildet ist.

5. Vorrichtung nach Anspruch 3 oder 4, dadurch gekennzeichnet, daß die Pendelstützen (15,16,115,116) einen unterschiedlichen seitlichen Abstand zum Spannelement (1,101) aufweisen.

6. Vorrichtung nach einem der Ansprüche 1 bis 5, dadurch gekennzeichnet, daß in den Endbereichen (112,113) des Spannbandes (114) Haltebolzen (124,125) vorgesehen sind, die mit entsprechenden Ausnehmungen (126-128) im Spannelement (101) zu dessen Verriegelung in der Schließstellung in Eingriff bringbar sind.

7. Vorrichtung nach einem der Ansprüche 1 bis 6, dadurch gekennzeichnet, daß das Spannband (14,114) als flexibles flaches Stahlband ausgebildet ist, an dem an diskreten Punkten Klammerelemente (23) angeordnet sind.

8. Vorrichtung nach einem der Ansprüche 1 bis 6, dadurch gekennzeichnet, daß das Spannband als Gliederkette ausgebildet ist, wobei zwischen gelenkig miteinander verbundenen Stegen (201-206) zylindrische Hülsen (210) angeordnet sind, die mit konisch geformten Endbereichen versehen sind.

9. Vorrichtung nach einem der Ansprüche 1 bis 8, dadurch gekennzeichnet, daß über den Umfang des Spannbandes wenigstens zwei Spannelemente (1,101) angeordnet sind.

## Claims

1. Device for detachably connecting cylindrical components, in the form of a tightening strap which embraces the regions of the components to be connected, on the inside of which are disposed clamp elements cooperating with flange-like projections of the components and which is provided with at least one tautening element, in which the end regions of the tightening strap are guided about pins disposed at right angles to the direction of pull, characterized in that the tautening element (1, 101) takes the form of a two-armed lever, on the two end regions of which the pins (10, 11, 110, 111) are disposed and which is mounted so as to be capable of swivelling about its centre on a pivot axis.

2. Device according to claim 1, characterized in that a rotary drive device (3-6) is associated with the pivot axis (2, 102) of the tautening element (1, 101).

3. Device according to claim 1 or 2, characterized in that mounting of the tautening element (1, 101) is effected by means of a locating bearing (7), which acts upon the pivot axis (2, 102), as well as by means of two pendulum supports (15, 16, 115, 116), which are connected to the pins (10, 11, 110, 111) and are coupled to the structure of one of the components (17, 18, 217, 218) which are to be connected to one another.

4. Device according to claim 3, characterized in that one of the pendulum supports (15, 16, 115, 116) is arc-shaped.

5. Device according to claim 3 or 4, characterized in that the pendulum supports (15, 16, 115, 116) are at differing lateral distances from the tautening element (1, 101).

6. Device according to one of claims 1 to 5, characterized in that provided in the end regions (112, 113) of the tightening strap (114) are retaining pins (124, 125) which may be brought into engagement with corresponding recesses (126-128) in the tautening element (101) in order to lock the tautening element in the closed position.

7. Device according to one of claims 1 to 6, characterized in that the tightening strap (14, 114) takes the form of flexible, flat steel band, on which at discrete points clamp elements (23) are disposed.

8. Device according to one of claims 1 to 6, characterized in that the tightening strap takes the form of a link chain, there being disposed between flexibly connected studs (201-206) cylindrical sleeves (210) which are provided with conically shaped end regions.

9. Device according to one of claims 1 to 8, characterized in that at least two tautening elements (1, 101) are disposed over the periphery of the tightening strap.

## Revendications

1. Dispositif pour relier de manière amovible des pièces cylindriques, sous la forme d'une bande de tension qui entoure les zones à relier des pièces, et dont le côté intérieur est muni d'éléments en forme de pinces coopérant avec des prolongements en forme de brides des pièces et en ce qu'il est prévu au moins un élément tendeur dans lequel les zones d'extrémité de la bande de tension sont guidées autour de goujons perpendiculaires à la direction de traction, caractérisé en ce que l'élément tendeur (1, 101) est un levièr à deux bras dont les deux zones d'extrémité portent les goujons (10, 11, 110, 11) et est monté de manière pivotante autour de son centre sur un axe de pivotement.

2. Dispositif selon la revendication 1, caractérisé en ce que l'axe de pivotement (2, 102) de l'élément tendeur (1, 101) comporte un dispositif d'entraînement en rotation (3-6).

3. Dispositif selon la revendication 1 ou 2, caractérisé en ce que la fixation de l'élément tendeur (1, 101) se fait par un palier fixe (7) agissant sur l'axe de pivotement (2, 102) ainsi que par l'intermédiaire de deux appuis pendulaires (15, 16, 115, 116), qui sont reliés aux goujons (10, 11, 110, 111) et qui sont articulés à la structure de l'une des pièces (17, 18, 217, 218) à relier.

4. Dispositif selon la revendication 3, caractérisé en ce que l'un des appuis pendulaires (15, 16, 115, 116) est de forme courbe.

5. Dispositif selon la revendication 3 ou 4, caractérisé en ce que les appuis pendulaires (15, 16, 115, 116) ont une distance latérale différente par rapport à l'élément tendeur (1, 101).

6. Dispositif selon l'une des revendications 1 à 5, caractérisé en ce que des goujons de fixation (124, 125) sont prévus dans les zones d'extrémité (112, 113) de la bande de tension (114), et qui peuvent être mis dans des cavités correspondantes (126-128) de l'élément tendeur (101) pour son verrouillage en position de fermeture.

7. Dispositif selon l'une des revendications 1 à 6, caractérisé en ce que la bande de tension (14, 114) est un ruban d'acier plat, souple, muni, en des points discrets, d'éléments de pinces (23).

8. Dispositif selon l'une des revendications 1 à 6, caractérisé en ce que la bande de tension est une chaîne à maillons et entre les branches (201-206) reliées de manière articulée sont prévues des douilles cylindriques (210) munies de zones d'extrémité de forme conique.

9. Dispositif selon l'une des revendications 1 à 8, caractérisé par au moins deux éléments tendeurs (1, 101) prévus à la périphérie de la bande de tension.
